# EUROPEAN PATENT APPLICATION

(11) **EP 2 073 093 A2**
(43) Date of publication of application: **24.06.2009**
(21) Application number: 08154499.1
(22) Date of filing: 15.04.2008
(51) Int. Cl.: G06F 1/20

(54) **Cooling module**

(30) Priority: 17.12.2007 TW 96148193
(71) Applicant: Partner Tech Corp., Shin Tien, Taipei (TW)
(72) Inventor: Tu, Chih-Sen, Taipei (TW); Liu, Tang-An, Taipei (TW)
(74) Representative: Viering, Jentschura & Partner

(57) **Abstract**

A cooling module for using in a metal housing of a calculation processing apparatus is disclosed. The cooling module is adapted to cool at least one heat source inside the metal housing. The cooling module comprises a first heat conduction plate, a second heat conduction plate and a heat conduction device, wherein the first heat conduction plate covers the heat source, the second heat conduction plate connects to the metal housing, and the heat conduction device is adapted to connect the first heat conduction plate with the second heat conduction plate. After the heat generated by the heat source is absorbed by the first heat conduction plate, the heat is transmitted to the second heat conduction plate through the heat conduction device, and will be dissipated uniformly throughout the metal housing.

## Description

This application claims the benefit from the priority of Taiwan Patent Application No. 096148193 filed on December 17, 2007, the contents of which are herein incorporated by reference in their entirety.

### CROSS-REFERENCES TO RELATED APPLICATIONS

Not applicable.

### BACKGROUND OF THE INVENTION

### Field of the Invention

The present invention provides a cooling module, and particularly, relates to a cooling module for cooling at least one heat source disposed inside a metal housing of a calculation processing apparatus.

### Descriptions of the Related Art

The advancement of science and technologies has resulted in the widespread use of calculation processing apparatuses in various electronic products, such as personal computers, personal digital assistants (PDAs) or the like. A calculation processing apparatus generally comprises a lot of electronic components that generate heat during the operation, such as a central processing unit (CPU), a memory, or an integrated circuit (IC) and so on. Conventionally, to avoid damage to the electronic components themselves or even the failure of the whole system due to overheating, a cooling fan is commonly used in the calculation processing apparatus to facilitate heat dissipation of the electronic components therein.

However, a cooling fan relies on the electric power for operation and usually generates undesired noise during the operation. It is not suitable for electronic products having requirement for power or noise limitations. Furthermore, because modern electronic products are becoming increasingly smaller, there may be insufficient space to accommodate a large cooling fan. Even if some electronic products are free from such limitations, a cooling fan disposed therein often tends to fail after operation for a long period of time. Under such circumstances, a technology that cooling modules no longer use fans to dissipate the heat has been developed.

Without the cooling fan, the cooling module uses a number of heat dissipating holes made on a housing of an electronic product dissipate the generated heat by natural heat conduction and the convention of air. However, the natural heat dissipation of hot air through the heat dissipating holes usually delivers a poor cooling effect, so another kind of improved heat dissipating module has also been proposed in the prior art. This type of improved dissipating module utilizes a heat conduction element attached on a housing of an electronic apparatus at a location corresponding to the heat-generating components therein. The heat conduction element absorbs the intense heat generated by the heat-generating components and dissipates the disused heat outwards. Although this cooling module may slightly improve the cooling efficiency, the module only acts as a single-point heat dissipating device disposed correspondingly to the heat-generating electronic components. For a CPU, which contributes most of the heat in an electronic apparatus, the whole cooling system can only withstand a total heat-generating power of less than 5 watts (W) of the CPU. Therefore, such a cooling module only makes a very limited improvement on the cooling effect, and also tends to dissipate heat unevenly. In more detail, after a heat-generating component has operated for a period of time, the housing thereof tends to present a non-uniform temperature distribution with a high temperature concentrating in a single local area. As a result, the temperature at the local area may be higher than 100 °C, with a risk of burns or even housing deformation.

Because modem calculation processing apparatus are developing more rapidly, the requirements on the total heat-generating power is also increasing. Accordingly, it is highly desirable in the art to provide a cooling module that can withstand a high total heat-generating power, generate no noise and allow convenient maintenance without using a cooling fan.

### SUMMARY OF THE INVENTION

One objective of this invention is to provide a cooling module without using a cooling fan so that an electronic product incorporating such a cooling module can comply with the noise-free requirements. The cooling module has a first heat conduction plate, a second heat conduction plate and a heat conduction device. The first heat conduction plate is substantially disposed above at least one heat source without coming into contact with each other. The heat conduction device is adapted to connect the first heat conduction plate and the second heat conduction plate, so that heat generated from the at least one heat source is absorbed by the first heat conduction plate and transmitted through the heat conduction device to the second heat conduction plate which is connected to a metal housing. In this way, the heat generated by the at least one heat source is dissipated outwards quickly without using a cooling fan.

Another objective of this invention is to provide a cooling module for uniformly dissipating heat. The first heat conduction plate is disposed above the at least one heat source without coming into contact with the heat source and has a profile substantially complying with the top of the at least one heat source. Consequently, the heat generated from the at least one heat source is quickly absorbed. Furthermore, in the preferred embodiment, when the second heat conduction plate is provided with an area no less than that of the first heat conduction plate, the heat generated from the at least one heat source can be transmitted, absorbed and then progressively transmitted to the metal housing more quickly. Additionally, since the second heat conduction plate dissipate heat in a uniform way rather than in a single local area, a relatively uniform temperature distribution is obtained on the surface of the metal housing when heat is conducted to the metal housing, thus eliminating the overheating of such the single local area.

Yet another objective of this invention is to provide a cooling module capable of withstanding a total heat-generating power higher than 5 W. Compared to conventional cooling modules that dissipate heat in a single local area, the multilayered cooling module of this invention distributes heat throughout the metal housing in more uniformly and quickly. As a consequence, the cooling module of this invention is able to withstand a higher total heat-generating power.

Yet a further objective of this invention is to provide a cooling module that allows for easy maintenance. The second heat conduction plate of this invention is indirectly fixed in the metal housing in a removable manner, while the first heat conduction plate is connected to the second heat conduction plate via the heat conduction device. Therefore, if the metal housing is removed from the electronic product, the electronic components, disposed inside the product, will be exposed immediately to facilitate the maintenance by the maintenance staff.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1A** illustrates an appearance of a calculation processing apparatus of this invention;
**FIG. 1B** illustrates a heat-generating component block inside the calculation processing apparatus of this invention;
**FIG. 2** illustrates a cooling module in an embodiment of this invention;
**FIG. 2A** illustrates a first heat conduction plate covering a heat source in an embodiment of this invention;
**FIG 2B** illustrates the connection between the first heat conduction plate and the second heat conduction plate in an embodiment of this invention;
**FIG. 2C** illustrates a metal housing in an embodiment of this invention; and
**FIG. 3** illustrates a heat dissipating assembly and a metal housing in an embodiment of this invention.

### DESCRIPTION OF THE PREFERRED EMBODIMENT

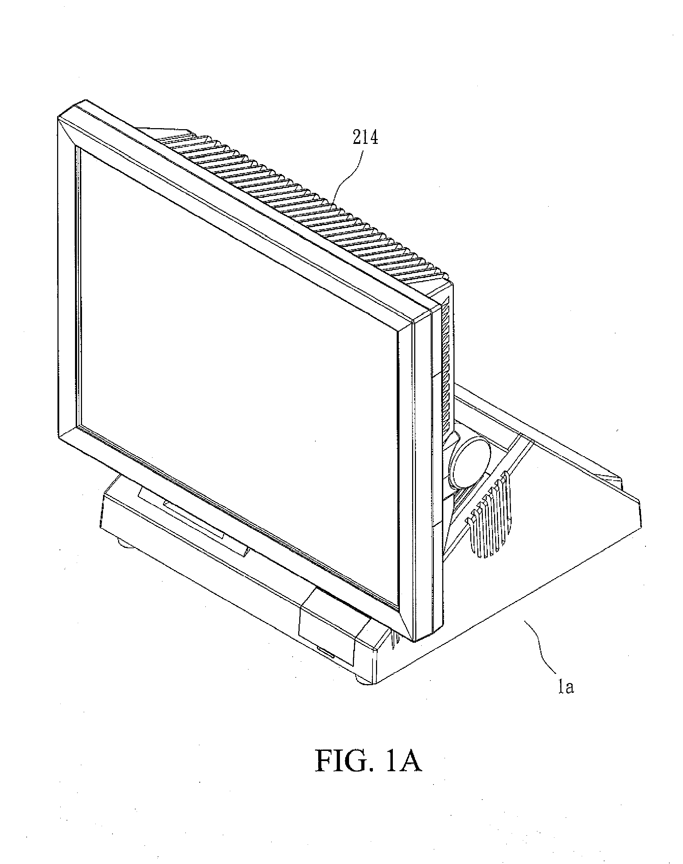

**FIG. 1A** illustrates an electronic apparatus, for example, a calculation processing apparatus. More particularly, the calculation processing apparatus is a point of sale (POS) apparatus **1a**. One of the features of the POS apparatus 1a is that no cooling fan is used therein so that the noise caused by the fan can be effectively decreased and the maintenance is easy. Th e following description provides several embodiments of a cooling module of this invention when being used to provide effective heat dissipation in the POS apparatus **1a.** However, as may be appreciated by those skilled in the art, the cooling module disclosed in this invention may also be applied to other different electronic apparatuses.

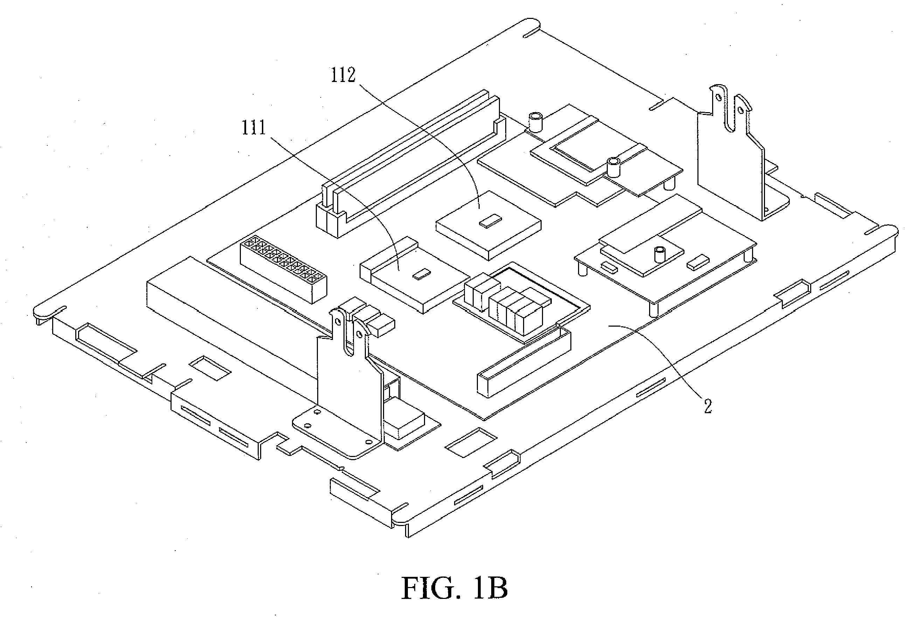

**FIG. 1B** depicts a heat-generating block of a circuit board **2** disposed inside the POS apparatus **1a**. The block includes at least one electronic component. For instance, there are two electronic components **111, 112,** which may be South Bridges, North Bridges, CPUs, memories or the like, disposed on the heat-generating block. Since the electronic components **111, 112** generate intense heat during operation, they act as at least one heat source in the POS apparatus **1a** of this invention. It should be noted that the types and the number of heat sources described above are only for purpose of illustration, rather than to limit the scope of this invention.

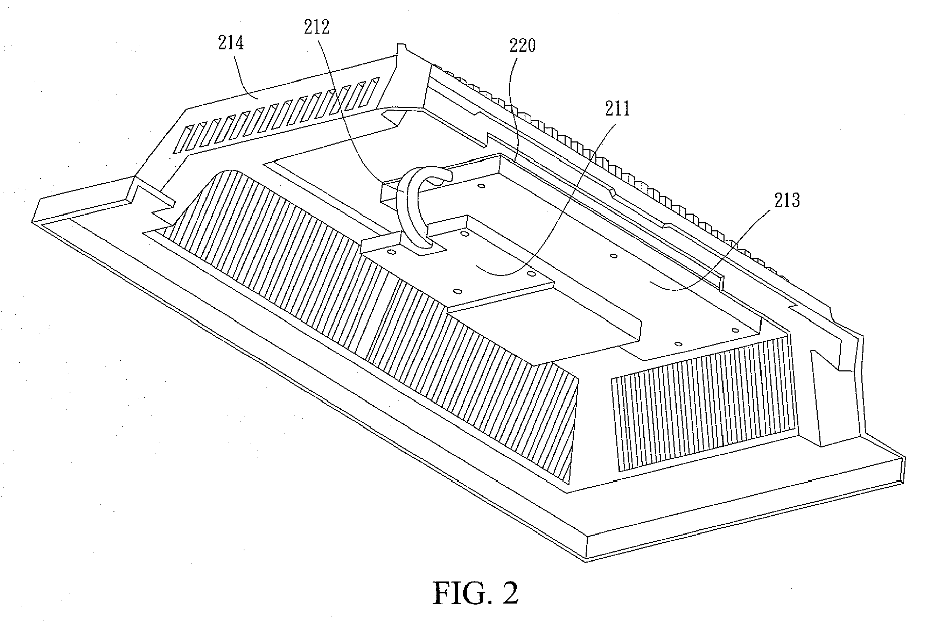

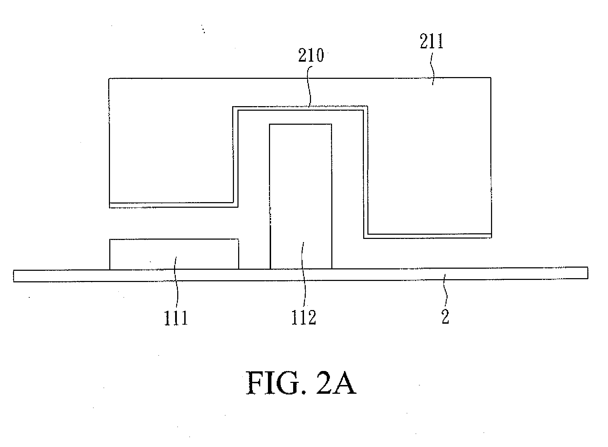

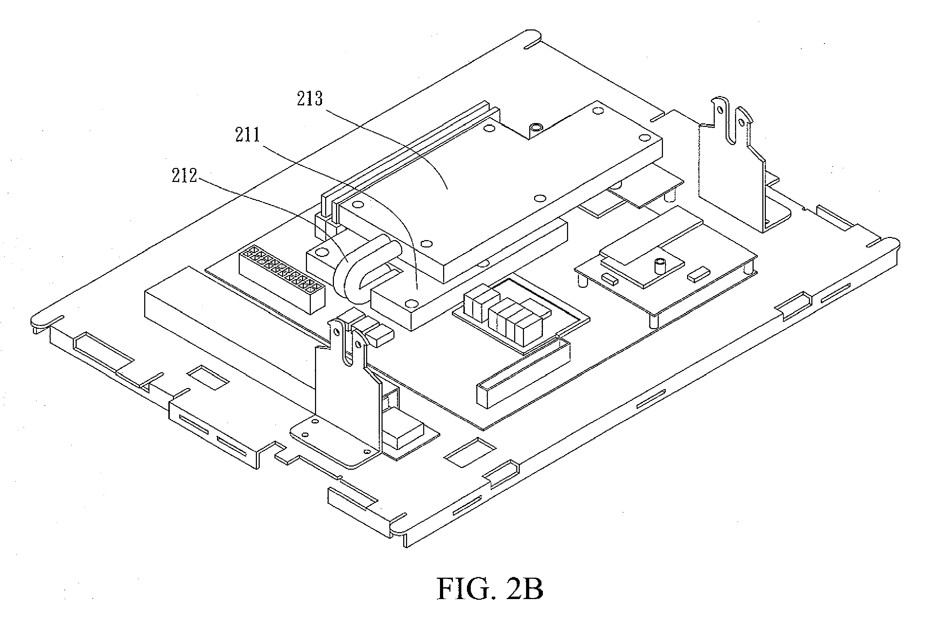

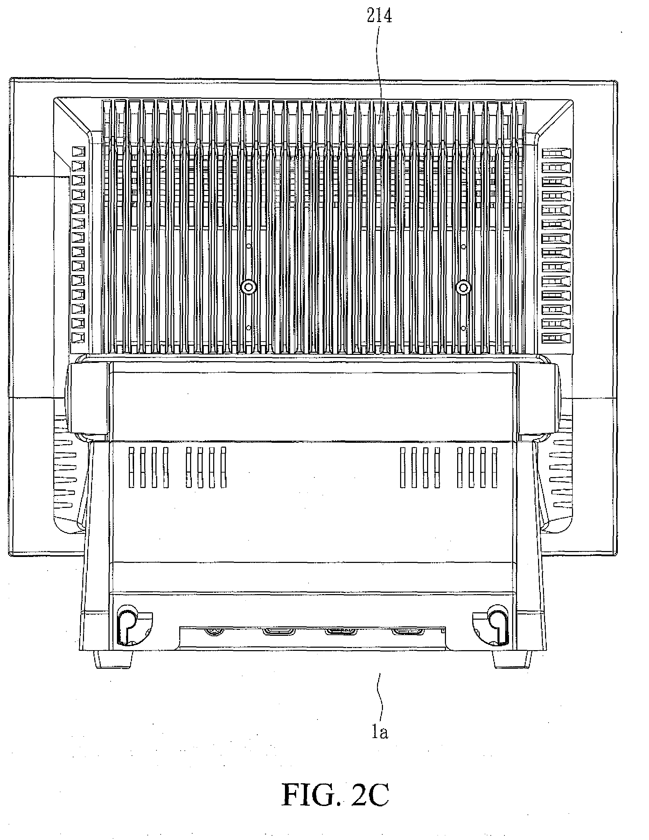

**FIG 2** illustrates an embodiment of a cooling module of this invention. The cooling module comprises a first heat conduction plate **211,** a heat conduction device **212,** a second heat conduction plate **213** disposed in a metal housing **214.** The first heat conduction plate **211** and the second heat conduction **213** are both made of a metal material, which is preferably selected from a group consisting of copper, aluminum, and the combination thereof. This invention is characterized in that the first heat conduction plate **211** substantially covers the heat-generating component block, as shown in **FIG 2A****.** In more detail, the first heat conduction plate **211** is disposed above these electronic components. The first heat conduction plate **211** has a shape that substantially complies with the top of the at least one heat source (i.e., the electronic components **111, 112** and etc.). In a preferred embodiment, the first heat conduction plate **211** may be disposed above the heat sources via a first thermal medium **210,** which acts as a medium for the heat conduction between the first heat conduction plate **211** and the electronic components. Consequently, the heat generated from the heat sources is absorbed by the first thermal medium and is conducted quickly to the first heat conduction plate **211,** to quickly absorb the intense heat generated by the heat sources and improve the cooling effect. The first heat conduction medium is generally a very thin layer of material, which is selected from a group consisting of thermal grease, thermal glue, lead-free solder, a thermal pad, and the combination thereof. It should be noted that in the preferred embodiment, the thermal grease or the thermal pad is used for the first thermal medium. If the heat sources present a high temperature, use of the lead-free solder shall be avoided to prevent an inverse damage to the electronic components (e.g., the CPU) due to the excessive high temperature of the lead-free solder. Additionally, for convenience, the use of thermal glue is avoided due to the difficulty of removing the solidified thermal glue.

As shown in both **FIGs. 2** and **2B****,** the first heat conduction plate **211,** the heat conduction device **212** and the second heat conduction **213** of the cooling module are depicted therein. The second heat conduction **213** is connected to a metal housing **214.** The heat conduction device **212** comprises a plurality of first heat conduction pipes substantially arranged side by side to connect the first heat conduction plate **211** and the second heat conduction plate **213** so that the heat absorbed from the at least one heat source by the first heat conduction plate **211** is conducted to the second heat conduction **213** via the conduction device **212,** and transmitted outwards by the metal housing **214.** In a preferred embodiment, the second heat conduction plate **213** has a surface area no less than that of the first heat conduction plate **211** to provide a cooling module with multiple layers that have increasingly larger heat-dissipating areas. This provides an improved cooling effect by allowing the heat generated inside the electronic product to be transmitted outwards in a more quickly and uniform manner.

**FIG. 2C** depicts the metal housing **214** of the POS apparatus **1a.** The metal housing **214** has a plurality of fins adapted to increase the heat-dissipating area of the metal housing. In particular, the metal housing **214** is formed with at least two opposite openings disposed respectively at an upper and a lower portion of the calculation processing apparatus for heat convection. In a preferred embodiment, the metal housing **214** is made of a metal material featuring a high cooling efficiency, for example, aluminum. Furthermore, it should be noted that the metal housing **214** and the second heat conduction plate **213** may be bonded together by several means. For example, to improve the heat conduction efficiency, a second thermal medium **220** (as shown in **FIG. 2****)** may be used as both an adhesive and a thermal conduction medium to adhere itself to the second heat conduction plate **213** indirectly and tightly on the metal housing **214.** Generally, the second thermal medium is typically made of a very thin layer of material, which is selected from a group consisting of thermal grease, thermal glue, lead-free solder, a thermal pad, and the combination thereof. Alternatively, fasteners such as screws (not shown) are used alone or in combination with the second thermal medium to connect the second heat conduction plate **213** tightly to the metal housing **214** to improve the heat conduction efficiency. It should be noted that, in consideration of the convenience of subsequent repeated disassembly, the use of thermal glue or lead-free solder or other solidified material is not used.

By using the assembled cooling module, the heat generated from the heat sources in the heat-generating component block is absorbed quickly by the first thermal medium and the first heat conduction plate **211,** and then transmitted to the second heat conduction plate **213** via the heat conduction device **212.** Th rough the second thermal medium, heat absorbed by the second heat conduction plate **213** is conducted to the metal housing **214.** As a result, the heat from the heat-generating component block can be dissipated outwards through the metal housing **214** in a quick, progressive and uniform manner. A relatively even temperature gradient distribution is obtained on the surface of the metal housing **214** at the back of the POS apparatus. An actual testing result reveals that when a CPU employs the cooling module of this invention, the CPU has a total heat-generating power of about 15W, while the temperature of the metal housing **214** stays at about 48∼51 °C. It should be noted that the temperature distribution on the surface of the metal housing **214** varies according to the different designs of the calculation processing apparatus. The above embodiments are only for illustration rather than limiting this invention. Moreover, the shortcomings of the conventional cooling systems, such as non uniform temperature distribution, high temperature distribution locally on the housing, are effectively overcome by this invention. Additional, the cooling module as a whole is attached to the metal housing by using a heat conductive adhesive and/or fasteners, so when the maintenance or service is required for the POS apparatus, the internal components inside the POS apparatus will be exposed immediately once the metal housing attached with the cooling module is removed from the POS apparatus, which will facilitate the maintenance or service operations performed by the maintenance staff.

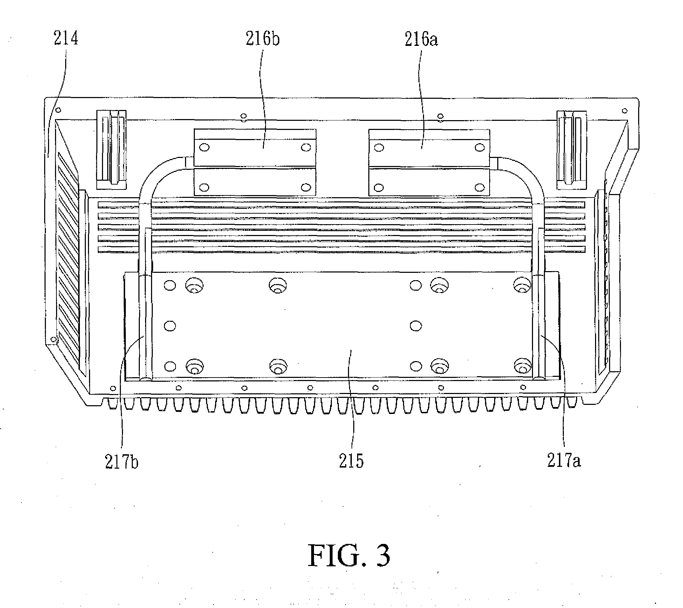

To improve the cooling efficiency of the aforesaid cooling module and to render the temperature distribution on the surface of the metal housing **214** more uniform, a cooling module according to another embodiment of this invention further comprises a cooling assembly disposed on the metal housing **214** of the POS apparatus in addition to the aforesaid elements, as shown in **FIGs. 2** and **3****.** In particular, in this embodiment, the cooling assembly comprises a third heat conduction plate **215,** two heat dissipating pieces **216a, 216b,** and two second heat conduction pipes **217a, 217b.** The third heat conduction plate **215** and the two heat dissipating pieces **216a, 216b** are made of a metal material, which is selected from a group consisting of copper, aluminum, and the combination thereof. The third heat conduction plate **215** is interposed between the second heat conduction plate **213** and the metal housing **214.** The two heat conduction pipes **217a, 217b** connect the corresponding heat dissipating pieces **216a, 216b** to the third heat conduction plate **215.** The heat dissipating pieces **216a, 216b** are preferably arranged near the heat convection openings of the metal housing **214** to improve heat dissipation efficiency. It should be emphasized that, as may be appreciated by those skilled in the art, the number and the arrangement of the heat conduction plates, heat conduction pipes and heat dissipating pieces in the cooling assembly may vary according to practical requirements, and those shown in the drawings are only for purpose of illustration, rather than to limit scope of this invention.

In this embodiment, the third heat conduction plate **215** and the second heat conduction plate **213** may be bonded tightly by using the aforesaid heat conductive adhesive alone and/or in combination with fasteners. The heat absorbed by the second heat conduction plate **213** via the cooling assembly disposed on the metal housing **214** is then transmitted to the metal housing **214** for uniform and quick dissipation outwards. In this way, it is possible for the POS apparatus incorporating the cooling module of this invention to effectively use electronic components with a higher heat-generating power than conventional ones. For example, in a CPU where the POS incorporates the cooling module of this invention, the allowed heat-generating power of the CPU is increased remarkably from only 5 W to higher than 10 W or even up to 50 W. Accordingly, the POS apparatus has significantly improved performance without being restricted by the low heat-generating power of the electronic components.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A cooling module for cooling at least one heat source disposed inside a metal housing of a calculation processing apparatus, the cooling module comprising:
a first heat conduction plate, disposed above the at least one heat source, wherein the first conduction plate has a shaping substantially complies with a top of the at least one heat source;
a second heat conduction plate, connected to the metal housing; and
a heat conduction device, connected to the first heat conduction plate and the second heat conduction plate so that heat generated from the at least one heat source is absorbed by the first heat conduction plate and transmitted to the second heat conduction plate through the heat conduction device, and then dissipated outside through the metal housing.

2. The cooling module of claim 1, further comprising a first thermal medium, wherein the first thermal medium is disposed between the first heat conduction plate and the at least one heat source and transmits the heat which is absorbed from the at least one heat source, to the first heat conduction plate, and wherein the first thermal medium is selected from a group consisting of thermal grease, thermal glue, lead-free solder, a thermal pad, and the combination thereof.

3. The cooling module of claim 1, further comprising a second thermal medium, wherein the second thermal medium is disposed between the second conduction plate and the metal housing for sticking the second heat conduction plate to the metal housing, and wherein the second thermal medium is selected from a group consisting of thermal grease, thermal glue, lead-free solder, a thermal pad, and the combination thereof.

4. The cooling module of claim 1, wherein the at least one heat source comprises a plurality of heat sources, and the first conduction plate has a shaping substantially complies with a top of the heat sources.

5. The cooling module of claim 4, wherein the thermal device comprises a plurality of first heat pipes, substantially arranged side by side.

6. The cooling module of claim 5, wherein a surface area of the second heat conduction plate is not less than that of the first heat conduction plate.

7. The cooling module of claim 5, further comprising a thermal assembly, attached to the metal housing, the thermal assembly comprising a third heat conduction plate disposed between the second heat conduction plate and the metal housing.

8. The cooling module of claim 7, wherein the thermal assembly further comprises a plurality of metal thermal pieces and a plurality of second heat pipes, connected to the third heat conduction plate via the corresponding metal thermal pieces.

9. The cooling module of claim 8, wherein the second heat conduction plate is adhered to the third heat conduction plate.

10. The cooling module of claim 9, further comprising a second thermal medium, wherein the second thermal medium is disposed between the second heat conduction plate and the metal housing for sticking the second heat conduction plate to the metal housing, and wherein the second thermal medium is selected form a group consisting of thermal grease, thermal glue, lead-free solder, a thermal pad, and the combination thereof.

11. The cooling module of claim 8, wherein the second heat conduction plate is fixed on the third heat conduction plate by fasteners.

12. The cooling module of claim 8, wherein each of the first, the second and the third heat conduction plates is selected from a group consisting of copper, aluminum, and the combination thereof.

13. The cooling module of claim 1, wherein the metal housing has a plurality of fins for increasing the heat-dissipation area of the metal housing.

14. The cooling module of claim 1, wherein the metal housing has at least two openings, opposite with each other, disposed respectively on an upper and a lower opposite end portion of the calculation processing apparatus for heat convection.

15. The cooling module of claim 1, wherein the calculation processing apparatus is a point on sale (POS).

16. The cooling module of claim 1, wherein the total working power of the at least one heat source is substantially no less than 10 watts.
